# EUROPEAN PATENT SPECIFICATION

(11) **EP 3 165 385 B1**
(45) Date of publication and mention of the grant of the patent: **05.09.2018**
(21) Application number: 16197170.0
(22) Date of filing: 03.11.2016
(51) Int. Cl.: B60D 1/64, F16L 37/56, B60T 17/04

(54) **DEVICE FOR THE TOWING VEHICLE-TRAILER CONNECTION**
VORRICHTUNG FÜR EINE VERBINDUNG ZWISCHEN FAHRZEUG UND ANHÄNGER
DISPOSITIF POUR CONNEXION ENTRE VEHICULE ET REMORQUE

(30) Priority: 04.11.2015 IT UB20154950
(43) Date of publication of application: 10.05.2017
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- WO-A2-2015/068141
- GB-A- 717 702
- GB-A- 2 077 872

## Description

The present invention relates to a connection device for trailers of agricultural machines. GB 2077872 discloses a vehicle-trailer connection according to the preamble of claim 1. As is known, today the towing vehicles are connected to the relative trailer by means of a connection device that allows placing the corresponding braking systems in communication to one another, in such a way that the braking of the towing vehicle operated by the operator also causes the braking of the towed trailer.

The braking system of the trailer is therefore driven by the braking system of the tractor in order to synchronize the braking forces acting on the same.

According to the recently introduced regulations the connection device between the towing vehicle and the relative trailer must comprise a portion connectable to the trailer and having a pair of female couplings intended to receive the corresponding male couplings connectable to the towing vehicle.

Of these female couplings one is connected to the braking system of the trailer and the other to the parking and/or automatic brake of the trailer itself, in such a way that, if the aforementioned male couplings detach from the relative female couplings, and therefore the oil supply lacks in the braking system of the trailer, the relative parking and/or automatic brake comes into operation.

The main aim of the present invention is to provide a connection device applicable to the trailer which allows the sequential engagement and disengagement of the female couplings from the relative male couplings.

Within this aim, one object of the present invention is to ensure the sequential disengagement of the male couplings associated with the towing vehicle from the relative female couplings even under emergency conditions, or in the case of braking of the towing hook of the trailer.

Another object of the present invention is to provide a connection device for trailers of agricultural machines which allows to overcome the mentioned drawbacks of the prior art within the ambit of a simple, rational, easy, effective to use and affordable solution.

The aforementioned objects are achieved by the present connection device for the towing vehicle-trailer connection according to claim 1.

Other characteristics and advantages of the present invention will become better evident from the description of a preferred, but not exclusive, embodiment of a connection device for trailers of agricultural machines, illustrated only by way of an indicative, but non-limiting, example in the accompanying drawings, in which:
Figures 1 to 3 represent the engagement phases of a device according to the invention, in a first embodiment, to the relative male couplings;
Figures 4 to 6 represent the disengagement phases of the device according to the invention, in the first embodiment, from the relative male couplings;
Figure 7 represents a device according to the invention in a second embodiment.

With particular reference to such figures, globally indicated with reference number 1 is a connection device for trailers of agricultural machines.

The device 1 comprises a base body 2 associable with a trailer, at least a first female coupling 3, communicating with a control line 32 connectable to the braking system of the trailer, and at least a second female coupling 4, communicating with at least one additional line 29 which acts on the parking brake of the trailer, and with at least one by-pass line 30 communicating with a discharge tank.

The first and the second female couplings 3, 4 are intended to receive a first and a second male coupling 5, 6 respectively, associable with a towing vehicle and connectable to the relative braking system.

In particular, the first and second male couplings 5, 6 are connectable to corresponding valves adapted to send to the same a work fluid at a first and at a second pressure, respectively.

Valve means 31 are also provided adapted to place in communication and isolate the additional line 29 and the by-pass line 30 following the exit and the insertion respectively, of the male coupling 6 inside the relative female coupling 4.

The first female coupling 3 comprises a first outer tubular element 3a and a first inner tubular element 3b, inserted one inside the other and mutually movable between them, and first locking means 3c associated with the first inner tubular element 3b and adapted to allow the locking and unlocking of the first male coupling 5 from the first female coupling itself.

The first inner tubular element 3b and the first outer tubular element 3a are mutually movable between an unlocking configuration, in which the first locking means 3c allow the insertion/removal of the first male coupling 5, and a locking configuration, in which the first locking means 3c prevent the relative movement between the first male coupling 5 and the first female coupling 3.

Advantageously, the first locking means 3c are of the type of a plurality of balls; the first inner tubular element 3b has a plurality of seats 7 inside which the balls 3c are housed and the first outer tubular element 3a defines a first retaining surface 8 against which the spheres rest in the locking configuration and has a first recess 9, which allows the balls 3c to move to the unlocking configuration. The first male coupling 5 in turn has a first annular groove 10 inside which the balls 3c are inserted.

More in detail, following the insertion of the first male coupling 5 inside the first female coupling 3, with the first tubular elements 3a and 3b in the unlocking configuration, the balls 3c are inserted inside the first groove 10 and the extremity of the first male coupling itself contacts an abutment surface 11 defined inside the first inner tubular element 3b, by moving the latter with respect to the first outer tubular element 3a until the achievement of the locking configuration.

The second female coupling 4 comprises a second outer tubular element 4a and a second inner tubular element 4b, arranged one inside the other, and second locking means 4c associated with the second inner tubular element 4b. The second outer tubular element 4a and the second inner tubular element 4b are mutually movable between an unlocking configuration, in which the second locking means 4c allow for the insertion/removal of the second male coupling 6, and a locking configuration, in which the second locking means 4c prevent the relative movement between the second male coupling 6 and the second female coupling 4.

Advantageously, the second locking means 4c are of the type of a plurality of balls housed inside corresponding seats 12 defined in the second inner tubular element 4b and, in the relative unlocking configuration, they are inserted inside a second recess 13 defined on the second outer tubular element 4a, while in the locking configuration they rest against a second retaining surface 14 defined by the second outer tubular element itself.

The second male coupling 6 has in turn a second annular groove 15 inside which the balls 4c are inserted.

More in detail, following the insertion of the first male coupling 5 inside the first female coupling 3, with the tubular elements 3a and 3b in the unlocking configuration, the balls 3c are inserted inside the first groove 10 and the extremity of the first male coupling itself contacts an abutment surface 11 defined inside the first inner tubular element 3b, by moving the latter with respect to the first outer tubular element 3a until the achievement of the locking configuration.

Preferably, the second inner tubular element 4b is fixed with respect to the body 2 and the second outer tubular element 4a is movable with respect to the inner one between the aforementioned unlocking and locking configurations.

The device 1 also comprises an unlocking element 28 locked together with the second outer tubular element 4a and movable between a passive position and an active position, in which the second outer tubular element 4a is located in the locking configuration and in the unlocking configuration, respectively. The unlocking element 28 is thus movable with respect to the body 2 in its displacement between the passive position and the active position.

Conveniently, elastic means 16 are provided adapted to press the second outer tubular element 4a towards the relative locking configuration.

Following the insertion of the second male coupling 6 inside the second female coupling 4, and more particularly of the second inner tubular element 4b, the balls 4c are inserted in turn inside the second groove 15 thus releasing the second outer tubular element 4a that, by effect of the action of the elastic means 16, moves to the locking configuration.

The unlocking element 28 defines a locator surface 17 contactable by a user to manually move it from the locking to the unlocking configuration.

Advantageously, the device 1 also comprises emergency means 18 operable to move the unlocking element 28 from the passive position to the active position following the application of a force of predefined entity on the emergency means themselves.

More in detail, the emergency means 18 comprise at least an actuation element 19 mechanically connected to the unlocking element 28 and movable with respect to the body 2 between a rest position, in which the unlocking element 28 is movable between the active and the passive position, and an emergency position, in which it is displaced with respect to the rest position and drags the unlocking element 28 towards the active position.

The actuation element 19 is connected to a flexible pull element 20, the type of an inextensible cable or a rope, connectable on the opposite side to the trailer. The pull element 20 is adapted to move the actuation element 19 with respect to the body 2 following the achievement of the aforementioned predefined force. For example, in the case of breaking of the towing hook of the trailer, the pull element 20 is tensioned by exerting a force on the actuation element 19.

Conveniently, the pull element 20 has lower extension than the pipes that connect the trailer to the towing vehicle, in such a way as to avoid breakage or damage of the same.

According to the invention, the first female coupling 3 is slidably movable with respect to the body 2 between a normal operating position, in which it is substantially aligned with the second female coupling 4 and an engagement/disengagement position, in which it protrudes with respect to the second female coupling 4 to allow for the sequential insertion and removal of the male couplings 5 and 6 with respect to the relative female couplings 3 and 4. In other words, in the engagement/disengagement position the first female coupling 3 is moved away from the body 2 with respect to the normal operating position.

More in detail, both the first outer tubular element 3a and the first inner tubular element 3b are slidably movable with respect to the body 2 between the normal operating position and the engagement/disengagement position.

According to the invention, moreover, one of the body 2 and the unlocking element 28 is adapted to interact with the first outer tubular element 3a to drag it to the relative unlocking configuration following the achievement of the active position by the unlocking element itself and the subsequent moving of the body 2 away from the male couplings 5, 6. More in detail, following the moving of the trailer away from the towing vehicle, the body 2 moves away from the male couplings 5, 6 and, after the unlocking element 28 has achieved the active position (manually or by effect of the emergency means 18), thus allowing for the removal of the second male coupling 6 from the relative female coupling 4, it shifts with respect to the first female coupling 3 (still connected to the first male coupling 5) until it interacts with the first outer tubular element 3a causing the displacement thereof with respect to the first inner tubular element 3b and the achievement of the relative unlocking configuration.

Advantageously, the first outer tubular element 3a has a first and a second abutment surface, identified with reference numbers 21 and 22 respectively, adapted to rest against relative counter abutments 23 and 24 in the normal operating position and in the engagement/disengagement position, respectively. The first inner tubular element 3b moves locked together with the first outer tubular element 3a during its displacement from the normal operating position to the engagement/disengagement position.

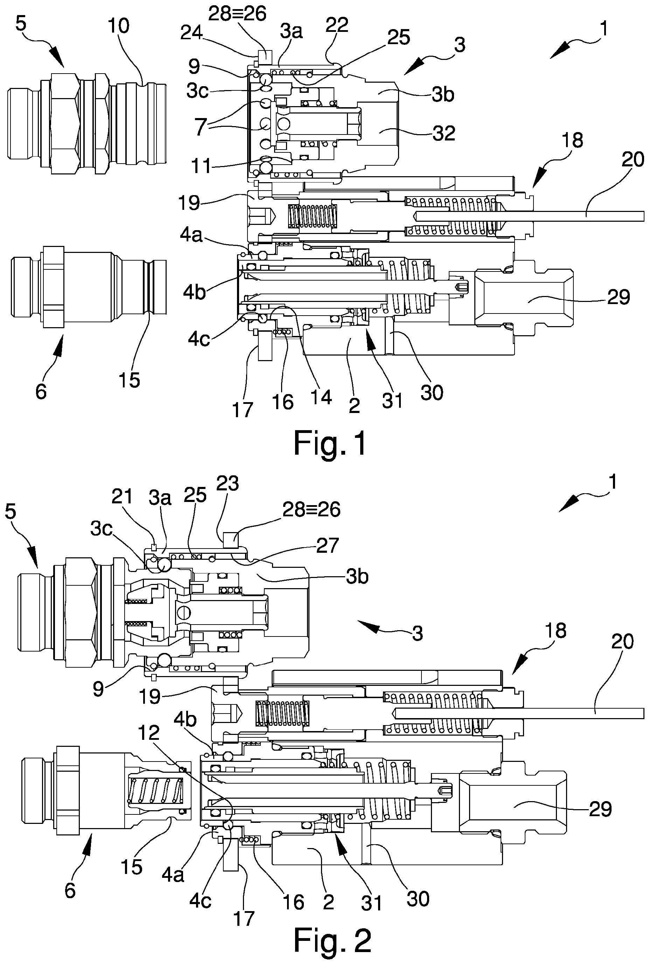

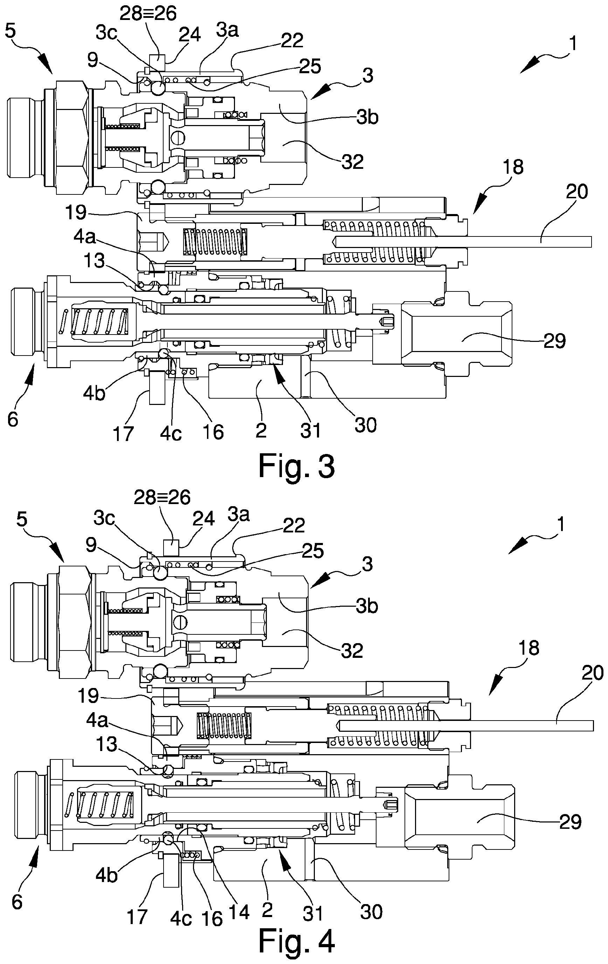

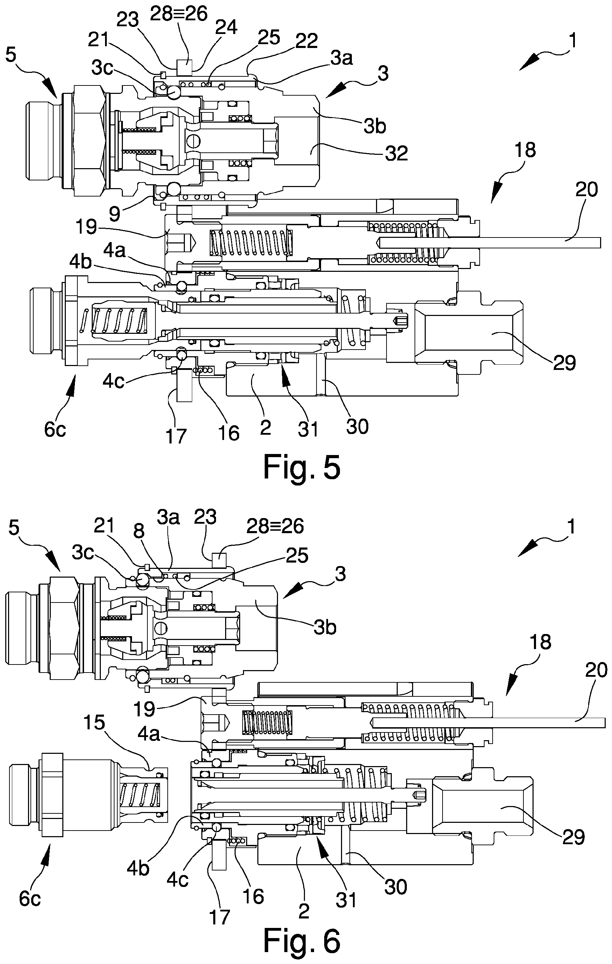

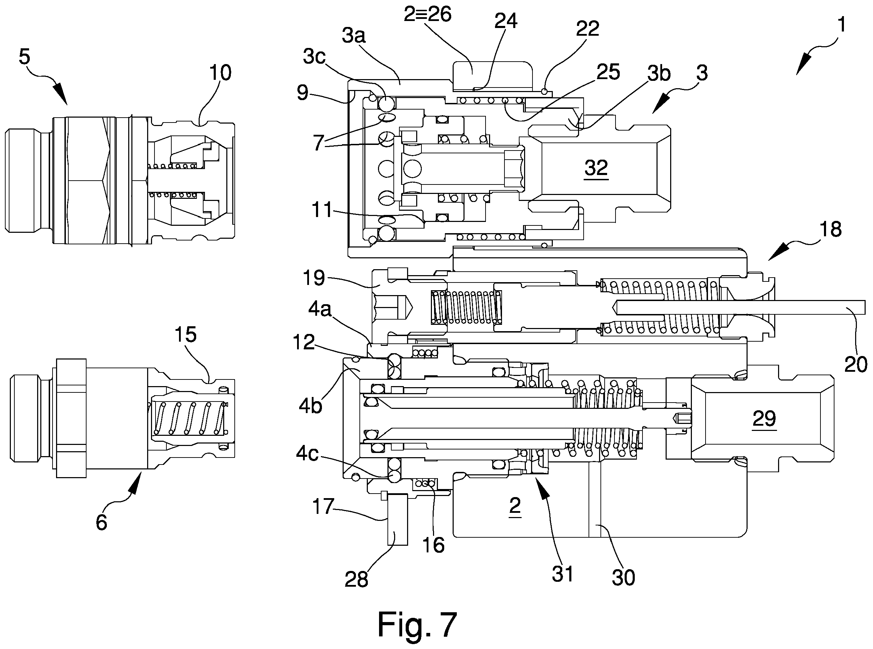

The counter abutments 23 and 24 are defined by one of the unlocking element 28, as in the embodiment of Figures 1 to 6, and the body 2, as in the embodiment of Figure 7.

More in detail, therefore, following the displacement of the unlocking element 28 to the active position and the displacement of the body 2 away from the male couplings 5, 6, the counter abutment 24, defined by the unlocking element itself or by the body 2 depending on the embodiment, interacts with the abutment surface 22 by moving this way the first outer tubular element 3a with respect to the first inner tubular element 3b until the achievement of the relative unlocking configuration.

Conveniently, the first female coupling 3 comprises elastic means 25 adapted to push the first inner tubular element 3b towards the relative locking configuration.

After achieving the engagement/disengagement position, or when the second abutment surface 22 rests against the second counter abutment surface 24, the first inner tubular element 3b is further movable with respect to the first outer tubular element 3a, counteracting the elastic means 25, to achieve the relative unlocking configuration.

Advantageously, the device 1 comprises at least one guide element 26 for guiding the sliding of the first female coupling 3 from the normal operating position to the engagement/disengagement position and vice versa.

In the first embodiment represented in Figures 1 to 6, the guide element 26 is defined by the unlocking element 28. More particularly, in this second embodiment, the unlocking element 28 has an extension which surrounds the first female coupling 3.

In the second embodiment shown in Figure 7, on the other hand, the guide element 26 is defined by the body 2. In other words, the body 2 has a through hole 27 through which the first female coupling 3 is slidably inserted. In this first embodiment, the counter abutment surfaces 23 and 24 are therefore defined by the body 2.

The operation of the present invention is as follows.

Before moving closer to the male couplings 5, 6, the inner and outer tubular elements 3a, 3b and 4a, 4b are in the corresponding locking configurations and the first female coupling 3 is in the normal operating position.

More particularly, in both female couplings 3 and 4, the relative locking means 3c, 4c rest against the corresponding retaining surfaces 8, 14 defined by the respective outer tubular elements 3a, 4a.

To carry out the engagement with the male couplings 5, 6, the first female coupling 3 is initially brought to the engagement position, or by moving the first tubular elements 3a, 3b until the second abutment surface 22 rests against the second counter abutment surface 24.

In this configuration, the first female coupling 3 is closer to the first male coupling 5 than the second female coupling 4 to the second male coupling 6.

At this point it is possible to further move the first inner tubular element 3b with respect to the first outer tubular element 3a in such a way as to bring it to the relative unlocking configuration.

After achieving this configuration, it is possible to introduce the first male coupling 5 inside the first female coupling 3 and, more particularly, in the first inner tubular element 3b.

Following this insertion, the balls 3c are inserted inside the first groove 10 and the first male coupling 5 continues until its axial extremity abuts against the abutment surface 11, returning the first inner tubular element 3b to the locking configuration. In this configuration the balls 3c are retained inside the relative seats 12 formed on the first inner tubular element 3b and inside the first groove 10 by the first retaining surface 8 defined by the first outer tubular element 3a.

Subsequently the body 2 is moved so as to return the first female coupling 3 to the normal operating position and, at the same time, to move the second female coupling 4 close to the second male coupling 6.

Following this insertion, the balls 4c are inserted inside the second groove 15 defined on the second male coupling 6 and, at the same time, the second outer tubular element 4a is pushed by the elastic means 16 to the locking configuration.

The first and the second male coupling 5 and 6 are therefore inserted in sequence inside the relative female couplings 3 and 4.

The disengagement operation of the male couplings 5, 6 takes place in reverse sequence with respect to the engagement configuration.

More particularly, to remove the male couplings 5, 6 it is necessary to intervene, first of all, manually or by means of the emergency means 18, on the unlocking element 28 to bring it to the active position.

After achieving this position, it is possible to move the body 2 away from the male couplings 5, 6, thus causing the disengagement of the second male coupling 6 from the relative female coupling 4 and the simultaneous displacement of the first female coupling 3 from the normal operating position to the engagement/disengagement position.

After achieving this position, by moving the body 2 further away from the male couplings 5, 6, the first outer tubular element 3a is brought to the unlocking configuration by effect of the interaction between the second counter abutment surface 24 and the second abutment surface 22, thus allowing to also remove the first male coupling 5.

It has in practice been found that the described invention achieves the intended objects and the fact is particularly underlined that the connection device to which the present invention refers, allows for the sequential engagement and disengagement of the female couplings to the relative male couplings.

In particular, the possibility of moving the female coupling connected to the control line with respect to the body of the device and with respect to the female coupling connected to the additional line allows moving in sequence the female couplings themselves close to the corresponding male couplings.

## Claims

1. Device (1) for the towing vehicle-trailer connection, comprising:
- a base body (2) associable with a trailer;
- at least a first female coupling (3), communicating with a control line (32) connectable to the braking system of the trailer, and at least a second female coupling (4), communicating with at least one additional line (29) which acts on the parking brake of the trailer; said first and second female couplings (3, 4) being intended to receive a first and a second male coupling (5, 6) respectively, which are associable with a towing vehicle and connectable to the corresponding braking system;
- wherein said first female coupling (3) comprises a first outer tubular element (3a) and a first inner tubular element (3b) arranged one inside the other and comprises first locking means (3c) associated with said first inner tubular element (3b); said first outer tubular element (3a) and said first inner tubular element (3b) being mutually movable between an unlocking configuration, in which said first locking means (3c) allow for the insertion/removal of the first male coupling (5), and a locking configuration, in which said first locking means (3c) prevent the relative movement between the first male coupling (5) and the first female coupling (3);
- wherein said second female coupling (4) comprises a second outer tubular element (4a) and a second inner tubular element (4b) arranged one inside the other and comprises second locking means (4c) associated with said second inner tubular element (4b); said second outer tubular element (4a) and said second inner tubular element (4b) being mutually movable between an unlocking configuration, in which said second locking means (4c) allow for the insertion/removal of the second male coupling (6), and a locking configuration, in which said second locking means (4c) prevent the relative movement between the second male coupling (6) and the second female coupling (4);
- at least one unlocking element (28) locked together with said second outer tubular element (4a) and movable between a passive position and an active position in which the second outer tubular element (4a) is located in the locking configuration and in the unlocking configuration respectively,
**characterized in that** said first female coupling (3) is slidably movable with respect to said body (2) between a normal operating position, in which it is substantially aligned with said second female coupling (4) and an engagement/disengagement position, in which it protrudes with respect to said second female coupling (4) to allow for the insertion and sequential removal of said male couplings (5, 6) with respect to the relative female couplings (3, 4),
one of said body (2) and said unlocking element (28) being able to interact with said first outer tubular element (3a) to drag it to the relative unlocking configuration following the achievement of the active position by the unlocking element itself and the subsequent moving of said body (2) away from the male couplings (5, 6).

2. Device (1) according to claim 1, **characterized in that** said first outer tubular element (3a) has a first and a second abutment surface (21, 22) able to rest against relative counter abutment surfaces (23, 24) in the normal operating position and in the engagement/disengagement position respectively, said first inner tubular element (3b) moving locked together said first outer tubular element (3a) during its displacement between the normal operating position and the engagement/disengagement position and said first outer tubular element (3a) moving towards the unlocking configuration following the interaction of said second abutment surface (22) with the relative counter abutment surface (24) and of the displacement of said body (2) away from the male couplings (5, 6).

3. Device (1) according to claim 2, **characterized in that** one of said body (2) and said unlocking element (28) is able to drag said first outer tubular element (3a) in the relative unlocking configuration following the interaction between said second abutment surface (22) and the relative counter abutment surface (24), the latter being defined by the body (2) or by the unlocking element themselves.

4. Device (1) according to one or more of the preceding claims, **characterized in that** said second inner tubular element (4b) is fixed with respect to said body (2) and **in that** said second outer tubular element (4a) is movable from the locking configuration towards the unlocking configuration counteracting the elastic means (16).

5. Device (1) according to one or more of the preceding claims, **characterized in that** it comprises at least one guide element (26) for guiding the sliding of said first female coupling (3) from the normal operating position to the engagement/disengagement position and vice versa.

6. Device (1) according to claim 5, **characterized in that** said guide element (26) is defined by said body (2).

7. Device according to claim 5, **characterized in that** said guide element (26) is defined by said unlocking element (28).

8. Device (1) according to one or more of the preceding claims, **characterized in that** it comprises emergency means (18) operable to move said unlocking element (28) from the passive position to the active position.

9. Device (1) according to one or more of the preceding claims, **characterized in that** said second female coupling (4) comprises at least one by-pass line (30) connectable to a discharge tank and valve means (31) able to place selectively in communication and isolating said additional line (29) and said by-pass line (30) following the exit and the insertion respectively, of the relative male coupling (6).

## Patentansprüche

1. Vorrichtung (1) für die Zugfahrzeug-Anhänger-Verbindung, umfassend:
- einen Basiskörper (2), der mit einem Anhänger verbunden werden kann;
- mindestens eine Kupplungsbuchse (3), welche mit einer Steuerleitung (32) kommuniziert, die mit dem Bremssystem des Anhängers verbunden werden kann, und mindestens eine zweite Kupplungsbuchse (4), welche mit mindestens einer zusätzlichen Leitung (29) kommuniziert, die auf die Parkbremse des Anhängers einwirkt; wobei die ersten und zweiten Kupplungsbuchsen (3, 4) dazu bestimmt sind, jeweils einen erste und einen zweiten Kupplungsstecker (5, 6) aufzunehmen, die mit einem Zugfahrzeug verbunden werden können und mit dem entsprechenden Bremssystem verbunden werden können;
- wobei die erste Kupplungsbuchse (3) ein erstes äußeres rohrförmiges Element (3a) und ein erstes inneres rohrförmiges Element (3b) umfasst, wobei das eine in dem anderen angeordnet ist, und erste Verriegelungsmittel (3c) umfasst, die mit dem ersten inneren rohrförmigen Element (3b) verbunden sind; wobei das erste äußere rohrförmige Element (3a) und das erste innere rohrförmige Element (3b) gegenseitig bewegt werden können zwischen einer Entriegelungskonfiguration, in der die ersten Verriegelungsmittel (3c) das Einsetzen/Entfernen des ersten Kupplungssteckers (5) gestatten, und einer Verriegelungskonfiguration, in der die ersten Verriegelungsmittel (3c) die relative Bewegung zwischen dem ersten Kupplungsstecker (5) und der ersten Kupplungsbuchse (3) verhindern;
- wobei die zweite Kupplungsbuchse (4) ein zweites äußeres rohrförmiges Element (4a) und ein zweites inneres rohrförmiges Element (4b) umfasst, wobei das eine in dem anderen angeordnet ist, und zweite Verriegelungsmittel (4c) umfasst, die mit dem zweiten inneren rohrförmigen Element (4b) verbunden sind; wobei das zweite äußere rohrförmige Element (4a) und das zweite innere rohrförmige Element (4b) gegenseitig bewegt werden können zwischen einer Entriegelungskonfiguration, in der die zweiten Verriegelungsmittel (4c) das Einsetzen/Entfernen des zweiten Kupplungsstecker (6) gestatten, und einer Verriegelungskonfiguration, in der die zweiten Verriegelungsmittel (4c) die relative Bewegung zwischen dem zweiten Kupplungsstecker (6) und der zweiten Kupplungsbuchse (4) verhindern;
- mindestens ein Entriegelungselement (28), das mit dem zweiten äußeren rohrförmigen Element (4a) verriegelt ist und zwischen einer passiven Position und einer aktiven Position bewegt werden kann, in der das zweite rohrförmige Element (4a) jeweils in der Verriegelungskonfiguration und in der Entriegelungskonfiguration angeordnet ist;
**dadurch gekennzeichnet, dass** die erste Kupplungsbuchse (3) gleitend bewegt werden kann in Bezug auf den Körper (2) zwischen einer normalen Betriebsposition, in der diese mit der zweiten Kupplungsbuchse (4) im Wesentlichen ausgerichtet ist, und einer Eingriffs/ Löseposition, in der diese in Bezug auf die zweite Kupplungsbuchse (4) vorsteht, um das Einsetzen und anschließende Entfernen der Kupplungsstecker (5, 6) in Bezug auf die jeweiligen Kupplungsbuchsen (3, 4) zu gestatten,
wobei eines von dem Körper (2) und dem Entriegelungselement (28) mit dem ersten äußeren rohrförmigen Element (3a) interagieren kann, um dieses in die jeweilige Entriegelungskonfiguration zu ziehen, nach dem Erzielen der aktiven Position durch das Entriegelungselement selbst und dem anschließenden Wegbewegen des Körpers (2) von den Kupplungssteckern (5, 6).

2. Vorrichtung (1) nach Anspruch 1, **dadurch gekennzeichnet, dass** das erste äußere rohrförmige Element (3a) eine erste und eine zweite Anlagefläche (21, 22) aufweist, die gegen jeweilige Gegenanlageflächen (23, 24) jeweils in der normalen Betriebsposition und in der Eingriffs/Löseposition anliegen können, wobei sich das erste innere rohrförmige Element (3b) verriegelt gemeinsam mit dem ersten äußeren rohrförmigen Element (3a) während seiner Verschiebung zwischen der normalen Betriebsposition und der Eingriffs/Löseposition bewegt, und wobei sich das erste äußere rohrförmige Element (3a) zur Entriegelungskonfiguration nach der Interaktion der zweiten Anlagefläche (22) mit der relativen Gegenanlagefläche (24) und der Verschiebung des Körpers (2) weg von den Kupplungssteckern (5, 6) bewegt.

3. Vorrichtung (1) nach Anspruch 2, **dadurch gekennzeichnet, dass** eines von dem Körper (2) und dem Entriegelungselement (28) das erste äußere rohrförmige Element (3a) in die jeweilige Entriegelungskonfiguration nach der Interaktion zwischen der zweiten Anlagefläche (22) und der jeweiligen Gegenanlagefläche (24) ziehen kann, wobei die Letztere von dem Körper (2) oder von dem Entriegelungselement selbst definiert wird.

4. Vorrichtung (1) nach einem oder mehreren der vorhergehenden Ansprüche, **dadurch gekennzeichnet, dass** das zweite innere rohrförmige Element (4b) in Bezug auf den Körper (2) fixiert ist, und dadurch, dass das zweite rohrförmige Element (4a) von der Verriegelungskonfiguration zur Entriegelungskonfiguration bewegt werden kann, wobei dieses den elastischen Mitteln (16) entgegenwirkt.

5. Vorrichtung (1) nach einem oder mehreren der vorhergehenden Ansprüche, **dadurch gekennzeichnet, dass** diese mindestens ein Führungselement (26) zum Führen des Gleitens der ersten Kupplungsbuchse (3) von der normalen Betriebsposition in die Eingriffs/Löseposition und umgekehrt umfasst.

6. Vorrichtung (1) nach Anspruch 5, **dadurch gekennzeichnet, dass** das Führungselement (26) von dem Körper (2) definiert wird.

7. Vorrichtung nach Anspruch 5, **dadurch gekennzeichnet, dass** das Führungselement (26) von dem Entriegelungselement (28) definiert wird.

8. Vorrichtung (1) nach einem oder mehreren der vorhergehenden Ansprüche, **dadurch gekennzeichnet, dass** diese Notfallmittel (18) umfasst, die betrieben werden können, um das Entriegelungselement (28) von der passiven Position in die aktive Position zu bewegen.

9. Vorrichtung (1) nach einem oder mehreren der vorhergehenden Ansprüche, **dadurch gekennzeichnet, dass** die zweite Kupplungsbuchse (4) mindestens eine Umgehungsleitung (30), die mit einem Abgabetank verbunden werden kann, und Ventilmittel (31) umfasst, welche die zusätzliche Leitung (29) und die Umgehungsleitung (30) jeweils nach dem Austritt und dem Einsetzen des jeweiligen Kupplungssteckers (6) selektiv in Kommunikation bringen und isolieren können.

## Revendications

1. Dispositif (1) pour l'attelage remorque-véhicule tracteur, comprenant :
- un corps de base (2) pouvant être associé à une remorque ;
- au moins un premier raccord femelle (3), communiquant avec une conduite de commande (32) pouvant être raccordée au système de freinage de la remorque, et au moins un second raccord femelle (4), communiquant avec au moins une conduite supplémentaire (29) qui agit sur le frein de stationnement de la remorque ; lesdits premier et second raccords femelles (3, 4) étant destinés à recevoir un premier et un second raccord mâle (5, 6) respectivement, qui peuvent être associés à un véhicule tracteur et peuvent être raccordés au système de freinage correspondant ;
- dans lequel ledit premier raccord femelle (3) comprend un premier élément tubulaire extérieur (3a) et un premier élément tubulaire intérieur (3b) agencés l'un dans l'autre et comprend des premiers moyens de verrouillage (3c) associés audit premier élément tubulaire intérieur (3b) ; ledit premier élément tubulaire extérieur (3a) et ledit premier élément tubulaire intérieur (3b) étant mutuellement mobiles entre une configuration de déverrouillage, dans laquelle lesdits premiers moyens de verrouillage (3c) permettent l'insertion/le retrait du premier raccord mâle (5), et une configuration de verrouillage, dans laquelle lesdits premiers moyens de verrouillage (3c) empêchent le mouvement relatif entre le premier raccord mâle (5) et le premier raccord femelle (3) ;
- dans lequel ledit second raccord femelle (4) comprend un second élément tubulaire extérieur (4a) et un second élément tubulaire intérieur (4b) agencés l'un dans l'autre et comprend des seconds moyens de verrouillage (4c) associés audit second élément tubulaire intérieur (4b) ; ledit second élément tubulaire extérieur (4a) et ledit second élément tubulaire intérieur (4b) étant mutuellement mobiles entre une configuration de déverrouillage, dans laquelle lesdits seconds moyens de verrouillage (4c) permettent l'insertion/le retrait du second raccord mâle (6), et une configuration de verrouillage, dans laquelle lesdits seconds moyens de verrouillage (4c) empêchent le mouvement relatif entre le second raccord mâle (6) et le second raccord femelle (4) ;
- au moins un élément de déverrouillage (28) verrouillé avec ledit second élément tubulaire extérieur (4a) et mobile entre une position passive et une position active dans lesquelles le second élément tubulaire extérieur (4a) est situé dans la configuration de verrouillage et dans la configuration de déverrouillage respectivement,
**caractérisé en ce que** ledit premier raccord femelle (3) est mobile en coulissement par rapport audit corps (2) entre une position de fonctionnement normale, dans laquelle il est sensiblement aligné avec ledit second raccord femelle (4) et une position d'enclenchement/de désenclenchement, dans laquelle il fait saillie par rapport audit second raccord femelle (4) pour permettre l'insertion et le retrait séquentiel desdits raccords mâles (5, 6) par rapport aux raccords femelles (3, 4) relatifs,
l'un dudit corps (2) et dudit élément de déverrouillage (28) étant capable d'interagir avec ledit premier élément tubulaire extérieur (3a) pour le traîner vers la configuration de déverrouillage relative suite à l'obtention de la position active par l'élément de déverrouillage lui-même et l'éloignement ultérieur dudit corps (2) des raccords mâles (5, 6).

2. Dispositif (1) selon la revendication 1, **caractérisé en ce que** ledit premier élément tubulaire extérieur (3a) a une première et une seconde surface de butée (21, 22) capables d'appuyer contre des contre-surfaces de butée (23, 24) relatives dans la position de fonctionnement normale et dans la position d'enclenchement/de désenclenchement respectivement, ledit premier élément tubulaire intérieur (3b) se déplaçant verrouillé avec ledit premier élément tubulaire extérieur (3a) pendant son déplacement entre la position de fonctionnement normale et la position d'enclenchement/de désenclenchement et ledit premier élément tubulaire extérieur (3a) se déplaçant vers la configuration de déverrouillage suite à l'interaction de ladite seconde surface de butée (22) avec la contre-surface de butée (24) relative et de l'éloignement dudit corps (2) des raccords mâles (5, 6).

3. Dispositif (1) selon la revendication 2, **caractérisé en ce que** l'un dudit corps (2) et dudit élément de déverrouillage (28) est capable de traîner ledit premier élément tubulaire extérieur (3a) dans la configuration de déverrouillage relative suite à l'interaction entre ladite seconde surface de butée (22) et la contre-surface de butée (24) relative, cette dernière étant définie par le corps (2) ou par l'élément de déverrouillage eux-mêmes.

4. Dispositif (1) selon une ou plusieurs des revendications précédentes, **caractérisé en ce que** ledit second élément tubulaire intérieur (4b) est fixe par rapport audit corps (2) et **en ce que** ledit second élément tubulaire extérieur (4a) est mobile depuis la configuration de verrouillage vers la configuration de déverrouillage en contrant les moyens élastiques (16).

5. Dispositif (1) selon une ou plusieurs des revendications précédentes, **caractérisé en ce qu'**il comprend au moins un élément de guidage (26) pour guider le coulissement dudit premier raccord femelle (3) de la position de fonctionnement normale à la position d'enclenchement/de désenclenchement et vice versa.

6. Dispositif (1) selon la revendication 5, **caractérisé en ce que** ledit élément de guidage (26) est défini par ledit corps (2).

7. Dispositif selon la revendication 5, **caractérisé en ce que** ledit élément de guidage (26) est défini par ledit élément de déverrouillage (28).

8. Dispositif (1) selon une ou plusieurs des revendications précédentes, **caractérisé en ce qu'**il comprend des moyens d'urgence (18) opérationnels pour déplacer ledit élément de déverrouillage (28) de la position passive à la position active.

9. Dispositif (1) selon une ou plusieurs des revendications précédentes, **caractérisé en ce que** ledit second raccord femelle (4) comprend au moins une conduite de dérivation (30) pouvant être raccordée à une cuve d'évacuation et des moyens de soupape (31) capables de placer sélectivement en communication et d'isoler ladite conduite supplémentaire (29) et ladite conduite de dérivation (30) suite à la sortie et à l'insertion respectivement, du raccord mâle (6) relatif.
